# EUROPÄISCHE PATENTANMELDUNG

(11) **EP 1 583 054 A1**
(43) Veröffentlichungstag der Anmeldung: **05.10.2005**
(21) Anmeldenummer: 05005664.7
(22) Anmeldetag: 16.03.2005
(51) Int. Cl.: G08B 13/14

(54) **Vorrichtung zur Positionsbestimmung und Auffindung von gestohlenen Objekten, insbesondere an Automobilen oder Baufahrzeugen**

(30) Priorität: 30.03.2004 DE 202004005156 U
(71) Anmelder: Wolf, Manfred, 91318 Neumarkt (DE)
(72) Erfinder: Wolf, Manfred, 91318 Neumarkt (DE)
(74) Vertreter: Lösch, Christoph Ludwig Klaus

(57) **Zusammenfassung**

Die Erfindung betrifft eine Vorrichtung zur Positionsbestimmung und Auffindung von gestohlenen Objekten 6, insbesondere zur Anbringung an Automobilen oder Baufahrzeugen, wobei ein GPS-Element 1 zur Datenübertragung (4) von aktuellen Positionskoordinaten und von Daten zur Art des Objektes 6 vorgesehen ist.

## Beschreibung

Die Neuerung betrifft eine Vorrichtung zur Positionsbestimmung und Auffindung von gestohlenen Objekten, insbesondere zur Anbringung an Automobilen oder Baufahrzeugen.

Der Neuerung liegt die Aufgabe zugrunde, eine Positionsbestimmung und Auffindung von gestohlenen Objekten zu ermöglichen. Diese Aufgabe wird durch die Merkmale des Schutzanspruchs 1 gelöst. Vorteilhafte Ausführungsformen werden in den Unteransprüchen 2 - 9 beschrieben.

Bei der neuerungsgemäßen Vorrichtung zur Positionsbestimmung und Auffindung von gestohlenen Objekten, insbesondere zur Anbringung an Automobilen oder Baufahrzeugen, ist ein GPS-Element (Global-Positioning-System) zur Datenübertragung von aktuellen Positionskoordinaten des Objektes und von Daten zur Art des Objektes vorgesehen.

Über ein derartiges GPS-Element kann der Aufenthaltsort eines gestohlenen Objektes durch Datenübertragung der jeweiligen Positionskoordinaten weltweit ermittelt werden. Bei bekanntem Aufenthaltsort können Maßnahmen zur Wiederbeschaffung des Objektes eingeleitet werden. Ferner kann verhindert werden, daß ein Objekt z.B. über Landesgrenzen in unzugängliche und für die Rechtsverfolgung nicht erreichbare Regionen und Länder verschafft werden. Insgesamt ermöglicht es die neuerungsgemäße Vorrichtung gestohlene Objekte zu lokalisieren und wiederzubeschaffen. Dies gilt insbesondere bei Anbringung der neuerungsgemäßen Vorrichtung an Automobilen oder Baufahrzeugen. Gerade hochwertige Automobile oder werthaltige Baufahrzeuge werden oftmals entwendet und können dann nur unter schwierigen Umständen oder überhaupt nicht wieder beschafft werden.

Nach einer vorteilhaften Ausführungsform ist mindestens ein Satellit oder ein Satellitensystem vorgesehen, welches zum Empfang oder zur Weiterleitung vom GPS-Element übertragenen Daten dient. Durch derartige in der Erdumlaufbahn befindliche Satelliten/Satellitensysteme kann der gesamte Oberflächenbereich der Erde erfaßt und auch in entlegene und unzugängliche Gebiete können verschaffte Objekte lokalisiert oder wiederbeschafft werden.

Nach einer weiteren vorteilhaften Ausführungsform werden die vom GPS-Element übertragenen Daten an ein Computersystem weitergeleitet, z.B. des Herstellers, des Eigentümers oder des Besitzers des jeweiligen Objektes. Hierdurch kann z.B. der Hersteller eines hochwertigen Automobils oder Baufahrzeugs feststellen, welche Automobile oder Baufahrzeuge entwendet wurden, wo sich diese befinden bzw. können gezielte Maßnahmen zur Wiederbeschaffung z.B. durch Weitergabe der Positionsdaten an Polizei oder Ermittlungsbehörden eingeleitet werden.

Zum Schutz von unbefugten Zutritt kann ein derartiges Computersystem paßwortgeschützt sein. Damit wird sichergestellt, daß nur autorisierte Benutzer die jeweiligen Daten zur Wiederbeschaffung gestohlener Objekte einsehen können, um einen Mißbrauch durch Unberechtigte zu verhindern.

Nach einer weiteren vorteilhaften Ausführungsform kann über das GPS-Element nicht nur eine Datenübertragung stattfinden, sondern es können auch Betriebsfunktionen des jeweiligen Automobils oder Baufahrzeugs angesteuert und verändert werden. Hierdurch kann es bei gestohlenen Objekten, insbesondere Automobilen oder Baufahrzeugen zu einer Sperrung oder Deaktivierung wesentlicher Betriebsfunktionen, z.B. von Steuergeräten, Motorsteuerungen, Motoren oder anderen für den Betrieb des Objektes wesentlichen Funktionen kommen.

In dieser Ausführungsform ermöglicht das GPS-Element nicht nur eine Datenübertragung, sondern vielmehr auch eine Veränderung der Betriebszustände des jeweiligen Objektes, wobei dieses für den Entweder in seiner Nutzung eingeschränkt oder auch völlig unbrauchbar gemacht werden kann. Derart kann z.B. ein gestohlenes Automobil oder Baufahrzeug lahm gelegt werden, so daß eine Aktivierung des Motors oder anderer Funktionen nicht mehr möglich ist. Damit kann das entwendete Objekt für den unberechtigten Besitzer unbrauchbar gemacht werden.

Nach einer weiteren vorteilhaften Ausführungsform besitzt das GPS-Element eine eigene Stromversorgung, so daß bei Abklemmung der Batterie des gestohlenen Automobils oder Baufahrzeugs die eigene Stromversorgung des GPS-Elements gewährleistet bleibt. Ferner kann das GPS-Element an einem schwer zugänglichen Ort im Objekt angebracht werden, so daß nur bei aufwendiger Demontage weiterer Teile eine Zugänglichkeit erreicht werden kann. Hierdurch kann verhindert werden, daß das GPS-Element unberechtigterweise demontiert oder unschädlich gemacht wird.

Der Neuerung ist anhand eines Ausführungsbeispiels in einer Zeichnungsfigur näher dargestellt.

Aus der Zeichnungsfigur geht ein GPS-Element 1 hervor, welches über eine Datenübertragung 2 in zwei Richtungen insbesondere aktuelle Positionskoordinaten und Daten eines gestohlenen Objektes 6 an einen Satelliten 3 überträgt. Vom Satelliten 3 können die Daten in zwei Richtungen an ein Computersystem 4 über eine weitere Datenübertragung 5 weitergeleitet werden. Am Computersystem 4 kann der Hersteller, Eigentümer und rechtmäßige Besitzer die aktuellen Positionskoordinaten und weitere Daten zum gestohlenen Objekt 6 abfragen und Maßnahmen zur Wiederbeschaffung einleiten. Ferner können in einer vorteilhaften Ausführungsform vom Computersystem 4 Betriebsfunktionen des gestohlen Objektes 6 aktiviert oder lahm gelegt werden.

### BEZUGSZEICHEN

- 1: GP5-Element
- 2: Datenübertragung
- 3: Satellit
- 4: Computersystem
- 5: Datenübertragung
- 6: Objekt

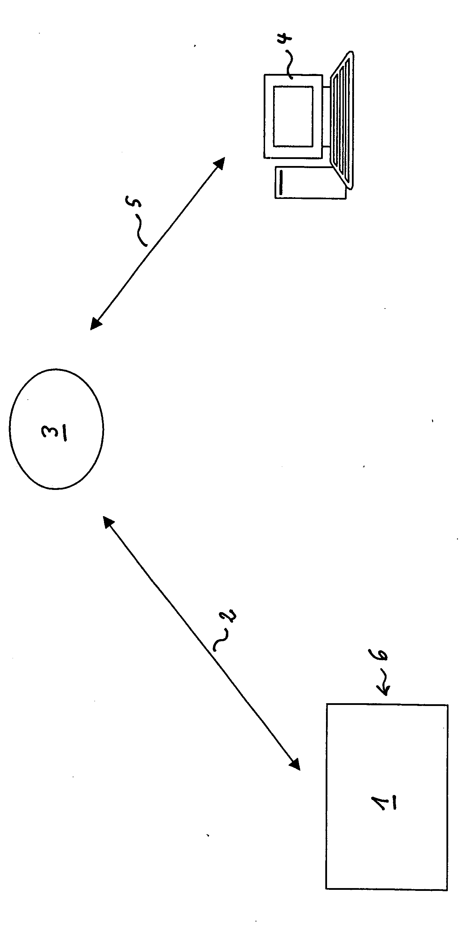

## Patentansprüche

1. Vorrichtung zur Positionsbestimmung und Auffindung von gestohlenen Objekten (6), insbesondere zur Anbringung an Automobilen oder Baufahrzeugen, wobei ein GPS-Element (1) zur Datenübertragung (4) von aktuellen Positionskoordinaten und von Daten zur Art des Objektes (6) vorgesehen ist.

2. Vorrichtung nach Anspruch 1, wobei ein Satellit (3) zum Empfang und/oder zur Weiterleitung der vom GPS-Element (1) übertragenen Daten vorgesehen ist.

3. Vorrichtung nach Anspruch 1 oder 2, wobei ein Computersystem (4) zum Empfang und zur Auswertung der vom GPS-Element (1) übertragenen Daten vorgesehen ist.

4. Vorrichtung nach Anspruch 3, wobei das Computersystem (4) dem Hersteller, Eigentümer oder Besitzer des jeweiligen Objektes (6) zugänglich ist.

5. Vorrichtung nach Anspruch 3 oder 4, wobei das Computersystem (4) paßwortgeschützt zugänglich ist.

6. Vorrichtung nach einem der vorhergehenden Ansprüche, wobei über das GPS-Element (1) weitere Betriebsfunktionen des Objektes (6) ansteuerbar sind.

7. Vorrichtung nach Anspruch 6, wobei Betriebsfunktionen des Objektes (6) über das GPS-Element (1) aktivierbar oder abschaltbar sind.

8. Vorrichtung nach einem der vorhergehenden Ansprüche, wobei das GPS-Element (1) eine eigene Stromversorgung aufweist.

9. Vorrichtung nach einem der vorhergehenden Ansprüche, wobei das GPS-Element (1) in einem Schutzgehäuse gesichert im oder am jeweiligen Objekt (6) angebracht ist.
